# EUROPEAN PATENT SPECIFICATION

(11) **EP 4 234 270 B1**
(45) Date of publication and mention of the grant of the patent: **21.05.2025**
(21) Application number: 23156152.3
(22) Date of filing: 10.02.2023
(51) Int. Cl.: B60C 7/06, B60C 7/14, B60C 7/18, B60C 7/20, B60C 7/24

(54) **ASSEMBLY FOR NON-PNEUMATIC SUPPORT OF A VEHICLE**
ANORDNUNG ZUR NICHTPNEUMATISCHEN LAGERUNG EINES FAHRZEUGS
ENSEMBLE DE SUPPORT NON PNEUMATIQUE D'UN VÉHICULE

(30) Priority: 25.02.2022 US 202217680941
(43) Date of publication of application: 30.08.2023
(73) Proprietor: The Goodyear Tire & Rubber Company, Akron, OH 44316 (US)
(72) Inventor: AGBOOLA, Babatunde Omogbolahan, Uniontown, 44685 (US); LIN, Cheng-Hsiung, Hudson, 44236 (US)
(74) Representative: Kutsch, Bernd

(56) References cited:
- US-A1- 2010 300 587
- US-A1- 2012 048 440
- US-B1- 10 449 804
- ASNANI V ET AL: "The development of wheels for the Lunar Roving Vehicle", JOURNAL OF TERRAMECHANICS, ELSEVIER, AMSTERDAM, NL, vol. 46, no. 3, 1 June 2009 (2009-06-01), pages 89 - 103, XP026108229, ISSN: 0022-4898, [retrieved on 20090405], DOI: 10.1016/J.JTERRA.2009.02.005
- GASPARINI: "Metalle und Materialien für niedrige Temperaturen und kryogene Anwendungen | Gasparini Industries", 14 January 2019 (2019-01-14), pages 1 - 14, XP093056074, Retrieved from the Internet <URL:https://www.gasparini.com/de/blog/metalle-und-materialien-fuer-niedrige-temperaturen/> [retrieved on 20230620]
- GASPARINI: "Metalle und Materialien für niedrige Temperaturen und kryogene Anwendungen |", 14 January 2019 (2019-01-14), pages 1 - 1, XP093056076, Retrieved from the Internet <URL:https://www.gasparini.com/wp-content/uploads/kaeltebestaendige-materialien.png> [retrieved on 20230620]
- MICHAEL MCCLINTOCK R ET AL: "Mechanical properties of structural materials at low temperatures : a compilation from the literature NBS MONO 13", 1 June 1960 (1960-06-01), pages 1 - 200, XP061044299, Retrieved from the Internet <URL:https://nvlpubs.nist.gov/nistpubs/Legacy/MONO/nbsmonograph13.pdf> [retrieved on 19600601], DOI: 10.6028/NBS.MONO.13
- RAYDURG FIDAHUSAIN A: "Future of Nitinol Tires", 1 March 2018 (2018-03-01), pages 74 - 78, XP093056082, Retrieved from the Internet <URL:http://www.ijirst.org/articles/IJIRSTV4I10031.pdf> [retrieved on 20230620]
- ARSEQUELL GIOVANNI ZAMBELLI: "RESEARCH OF SHAPE MEMORY ALLOY WHEELS FOR MARS ROVERS", 1 May 2021 (2021-05-01), pages 1 - 57, XP093056107, Retrieved from the Internet <URL:https://www.theseus.fi/bitstream/handle/10024/503368/Zambelli_Giovanni.pdf?sequence=3&isAllowed=y> [retrieved on 20230621]
- MONTANO J W: "A mechanical property and stress corrosion evaluation of MP 35N multiphase alloy", 10 March 1971 (1971-03-10), pages 1 - 32, XP093056314, Retrieved from the Internet <URL:https://ntrs.nasa.gov/api/citations/19710016567/downloads/19710016567.pdf> [retrieved on 20230621]

## Description

### Field of the Invention

The present invention relates to a system for non-pneumatic support of a vehicle and, more specifically, to a non-pneumatic tire for extremely low temperature service.

### Background of the Invention

The National Aeronautics and Space Administration (NASA) has developed surface vehicles to support long range lunar exploration, the development of a lunar outpost, and other planetary exploration. These vehicles are heavier and travel greater distances than the Lunar Roving Vehicle (LRV) developed for the Apollo program in the late 1960s. Consequently, new tires will be required to support up to ten times the weight, and last for up to one hundred times the travel distance, as compared to those used on the Apollo LRV, thereby requiring operational characteristics similar to passenger vehicles used on earth. However, conventional rubber pneumatic tires cannot function acceptably in space.

For example, rubber properties vary significantly between the cold temperatures experienced in shadow (down to 40 K) and the hot temperatures in sunlight (up to 400 K). Further, rubber degrades when exposed to direct solar radiation, without atmospheric protection. Finally, an air-filled tire is not permissible for manned lunar vehicles because of the possibility of a flat tire. To overcome these limitations, a tire design has been developed for the Apollo LRV and was successfully used on Apollo missions 15, 16, and 17. This non-pneumatic tire was woven from music wire, which was robust to lunar temperature variations and solar radiation, operated in vacuum, and did not require air for load support. This structure further functioned to contour to the lunar terrain, which facilitated traction and reduced vibration transfer to the Apollo LRV.

As stated above, because of the new weight and distance requirements for lunar vehicles, a tire with greater strength and durability was required. Further, it has been found that vehicles and tires on the moon may experience temperatures as low as 25 K. One conventional wheel and non-pneumatic tire assembly has a variable diameter which, in addition to changing its diameter, may also change its width, thereby increasing the area of the tire that engages the lunar surface. Thus, this non-pneumatic tire may be adjusted to increase a vehicle's performance according to the terrain over which it is traveling. This tire/wheel may have arching members with first and second ends connecting a wheel hub. The arching members may be interlaced helical springs forming a partially compliant cage. The arching members may extend outwardly in an arc between the first and second ends. The arching members form a plurality of flexible hoops spaced circumferentially around the hub and extending radially outward from the hub. For example, the conventional cage may include thirty-eight equally spaced radially extending hoops that arch between axially outer rims of a hub. The hoops may be made of helical steel springs cut to a desired length and threaded through each adjacent spring. The conventional hub may be expanded/contracted axially for varying the diameter of the tire/wheel.

Thus, such a conventional non-pneumatic tire/wheel includes a plurality of helical springs. Each helical spring includes a first end portion, a second end portion, and an arching middle portion interconnecting the first end portion and the second end portion. Each helical spring is interwoven, or interlaced, with at least one other helical spring of the plurality thereby forming a woven toroidal structure extending about an entire circumference of the non-pneumatic tire/wheel. A subset of helical springs may be secured to a first annular rim of a wheel and/or a second annular rim of the wheel. A wheel with an annular rim at each axial side of the tire may secure the tire to the wheel. Thus, as compared to structures of conventional pneumatic tires, the woven/laced toroidal structure of interwoven helical springs may define a first ply for the non-pneumatic tire. A second ply may radially overlap the first ply. Such a second ply may comprise the same interwoven toroidal structure as the first ply. The conventional steel tire/wheel has now been found to experience temperatures as low as 25 K on the moon. Steel becomes weak and brittle under such conditions. As a result, an improved non-pneumatic tire for use on the moon is desirable.

US 2010/300587 A1, US 10,449,804 B1 and US 2012/048440 A1 describe an assembly in accordance with the preamble of claim 1.

### Definitions

"Annular" means formed like a ring.

"Axial" and "axially" are used herein to refer to lines or directions that are parallel to the axis of rotation of the tire.

"Gauge" refers generally to a measurement, and specifically to a thickness measurement.

"Harshness" means the amount of disturbance transmitted by a tire when it passes over minor, but continuous, road irregularities.

"Lateral " means an axial direction.

"Rim" means a support for a tire or a tire and tube assembly upon which the tire is secured.

Spring rate" means the stiffness of a tire or spring expressed as the slope of a load defection curve.

### Summary of the Invention

The invention relates to an assembly in accordance with claim 1.

An assembly in accordance with the present invention has a wheel and a non-pneumatic tire. The nonpneumatic tire includes a plurality of helical springs. Each helical spring includes a first end portion, a second end portion, and an arching middle portion. Each helical spring is interlaced with at least one other helical spring thereby forming a laced toroidal structure extending about an entire circumference of the nonpneumatic tire. The toroidal structure supports an entire load placed on the nonpneumatic tire. The first end portions of the helical springs are directly secured to a first annular structure of the wheel and the second end portions of the helical springs are directly secured to a second annular structure of the wheel. The first end portion of each of the plurality of helical springs is oriented coaxially with the second end portion of each of the plurality of helical springs. The plurality of helical springs are constructed of a material that maintains strength and ductility down to 17 K.

### Brief Description of the Drawings

The structure, operation, and advantages of the present invention will become more apparent upon contemplation of the following description as viewed in conjunction with the accompanying drawings, wherein:
FIG. 1 represents a schematic illustration of an example tire and wheel assembly in accordance with the system of the present invention.
FIG. 2 represents a section taken through line 2-2 in FIG. 1.
FIG. 3 represents a section taken through line 3-3 in FIG. 2.

### Detailed Description of Example Embodiments of the Present Invention

A tire for use with the present invention and as described by US-B-8,141,606 and US-B-8,662,122 include an interlaced plurality of helical springs, preferably coiled wires which deform elastically under load with little energy loss. The tire defines a toroidal shaped structure for mounting to a wheel. The tire contours to a surface on which the tire engages to facilitate traction while mitigating vibration transmission to a corresponding vehicle. The helical springs support and/or distribute a load of a vehicle.

Under the weight of the vehicle, the tire may be driven, towed, or provide steering to the vehicle. The helical springs of the tire may passively contour to any terrain by flexing and moving with respect to each other. The interlaced structure of the helical springs provides stability to the tire and prevents the structure from collapsing as the tire rotates and engages variably terrain.

The helical springs of the tire may be resilient through a finite range of deformation, and thus a relatively rigid frame may be used to prevent excessive deformation. Radially oriented springs may be used to connect the tire to the wheel. These springs may be interlaced. Other springs may be incorporated with the tire at any bias angle, from radial to circumferential, with the purpose of distributing load. These other springs may be helical springs. Further, as one example, these other springs may extend circumferentially around the tire at a radially outer portion of the tire.

As one example, four basic steps may be utilized to manufacture one example tire: (i) twisting helical springs together to form a rectangular sheet with a length corresponding to the desired tire circumference; (ii) interlacing ends of the rectangular sheet of springs to form a mesh cylinder; (iii) collapsing one end of the mesh cylinder and attaching it to a rim of a wheel; and (iv) flipping the other end of the mesh cylinder inside out and attaching it to another axially opposite rim of the wheel.

The tire for use with the present invention may be utilized on Earth, the Moon, Mars, and/or any other planetary body, since its elements operate reliably in atmospheric and terrain conditions of these planets. The tire may be utilized on its own or incorporated as a partial or auxiliary load support/distribution system within another tire type. The tire, however, requires no air, requires no rubber, operates in difficult environments, and contours to all terrains.

The tire provides an improvement over the conventional wire mesh tire of the Apollo LRV. The tire provides higher load capacity, since wire size of the helical springs may be increased with relatively little functional alteration. The tire provides a longer cycle life, since wire stresses of the helical springs are more uniformly distributed throughout the structure. Further, the tire provides relatively low weight per unit of vehicle weight supported, since the interlaced helical spring network is fundamentally stronger than a crimped wire mesh. Additionally, the tire provides improved manufacturability, since the helical springs may be screwed, or interwoven, into one another, rather than woven together. Furthermore, helical springs are able to compress and elongate to accommodate manufacturing variations. Finally, the tire provides improved design versatility, since load distribution springs may be added to vary the tire strength in different tire locations and directions.

A tire for use with the present invention may thus be utilized where low vehicle energy consumption is required, where tire failure poses a critical threat, for traveling through rough terrain, where the vehicle is exposed to extreme high and low temperatures or high levels of radiation.

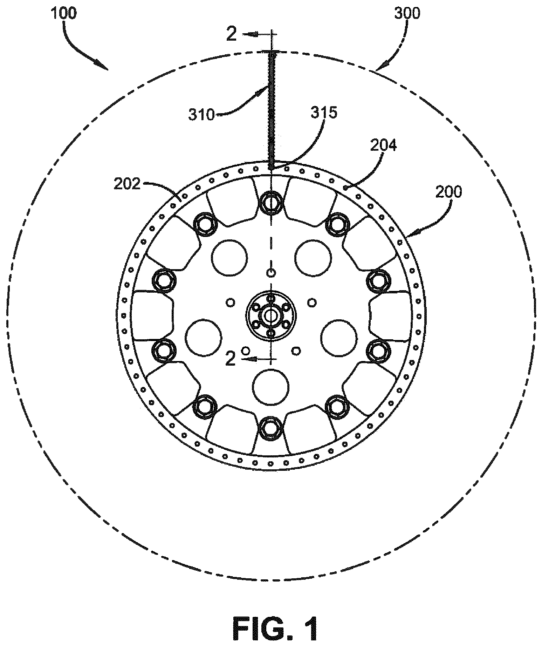

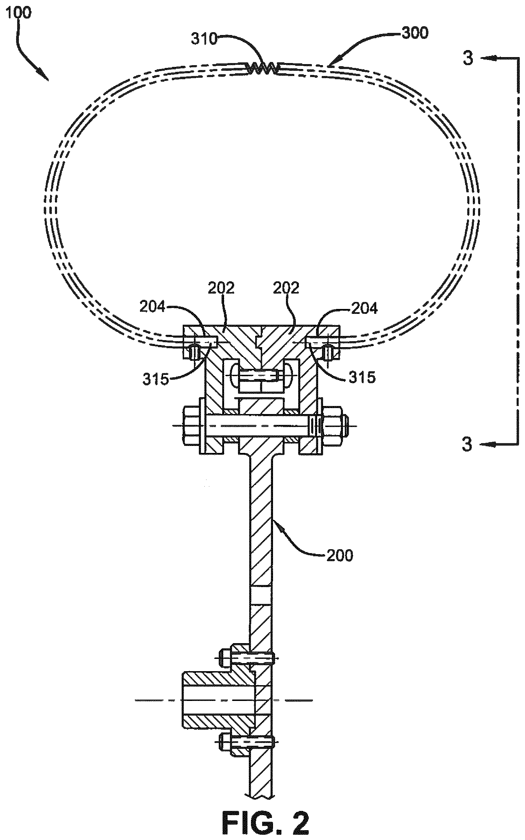

As shown in FIGS. 1 through 3, an example assembly 100 in accordance with the present invention includes a wheel 200 and a tire 300. The wheel 200 has an annular rim 202 at each axial side for securing the tire 300 to the wheel. Each rim is fixed 202 relative to the other rim 202. Each rim 202 may include a plurality of socket holes 204 for aligning the tire 300 with the rim. Any other suitable means may be used for securing the tire 300 to the rim 200.

The tire 300 includes a plurality of helical springs 310 extending radially away from the wheel 200 in an arching configuration and radially back toward the wheel. Each end 315 of each spring 310 is secured to wheel at a corresponding rim 202 of the wheel. Each spring 310 has a middle portion interconnecting the ends 315. Each end 315 may be secured at an axial orientation or at an angled orientation, with the spring 310 extending outward from one rim 202, then away from the wheel 300, then back over itself, then inward, and finally toward the other rim 202. Each end 315 of each spring may thereby be oriented coaxially (or at an angle) with the other end 315 of the same spring.

Further, is spring 310 be interlaced with adjacent springs 310 enabling load sharing between springs. Each spring 310 is interlaced, or interwoven, with an adjacent spring 310 on a first side of the spring and further being interlaced with an adjacent spring 310 on a second opposite side of the spring. Thus, the springs 310 extend radially and axially and form a laced toroidal structure extending about an entire circumference of the tire 300 (FIGS. 1 through 3).

The helical springs 310 may be any suitable length, gauge, and pitch. The helical springs 310 may vary in coil diameter (i.e., barrel springs may be used) to create continuity in the mesh through the range of radial positions in the tire. The helical springs 310 may be further structured as two or more plies, one or more radially inner plies being radially overlapped by one or more radially outer plies.

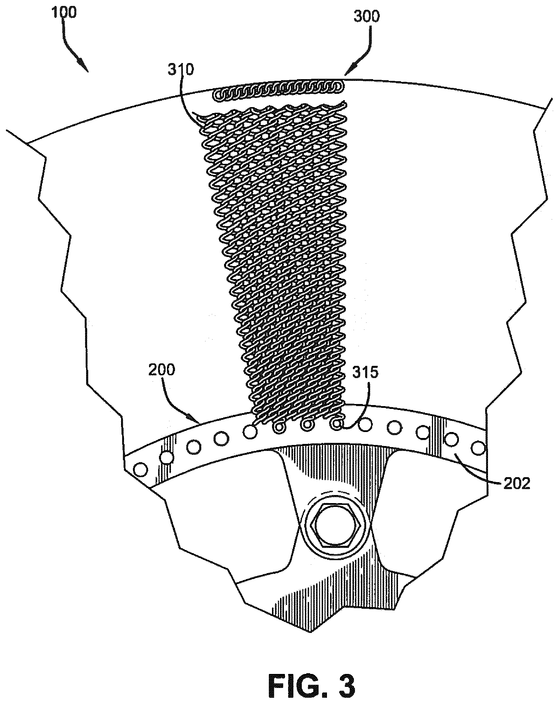

The purely metallic, conventional non-pneumatic spring tire 300 described above has been developed for space applications. The structure is a series of interwoven springs as seen in FIG. 3. This structure was well suited to space applications where rubber is not permitted due to temperature variations (40K to 400K). In addition, the spring tire 300 may achieve excellent traction where soil composition may be soft sand such as the Moon.

It has been found that permanently shadowed craters on the Moon may feature some of the lowest temperatures in the solar system - down to 20 K. Water ice may be stable at these temperatures, and it is believed that some of these craters harbor significant ice deposits. Consequently, according to the present invention, the spring tire 300 is constructed of a material that retains its strength and ductility at temperatures as low as 17 K.

A conventional spring tire for the Moon has been constructed of materials which can survive and remain stable between 40 K and 400 K based on the then knowledge of the lunar temperature. As stated above, lunar temperatures may be as cold as 20K. Therefore, a new spring tire needs to be considered for lunar exploration to the permanent shadowed region of the lunar surface. Thus, a spring tire 300 with metallic alloys that would survive temperatures ranging from 17 K to 400 K is desirable. Ideally, such metallic alloys would function at extremely low cryogenic temperatures as low as 17 K and even down to 0 K.

One suitable material is 304ELC stainless steel and/or 310 Low-C stainless steel. Such a material maintains strength and ductility down to 17 K.

Another suitable material is 2024-T4 aluminum, 6061-T6 aluminum, 2219-T87 aluminum, 5052-H38 aluminum, and/or 5083-H38 aluminum. Such a material maintains strength and ductility down to 17 K.

Still another suitable material is nickel-based monel, TD Nickel, nickel-based Hastlelloy B, nickel-based Inconel X, nickel-based Inconel 718, and/or nickel-based Rene 41. Such a material maintains strength and ductility down to 17 K.

Yet another suitable material is 5Al-2.5Sn-Ti ELI titanium and/or Ti45A [AMS 4902] titanium. Such a material maintains strength and ductility down to 17 K.

Still another suitable material is nickel-based Inconel 600. Such a material maintains strength and ductility down to 17 K.

Yet another suitable material is multiphase Co-35Ni-20Mo-10Cr alloy MP35N. Such a material maintains strength and ductility down to 17 K.

## Claims

1. An assembly comprising a wheel (200) and a non-pneumatic tire (300), the non-pneumatic tire (300) comprising a plurality of helical springs (315), each helical spring (315) comprising a first end portion, a second end portion, and an arching middle portion, wherein each helical spring (31) is interlaced with at least one other helical spring (315) thereby forming a laced toroidal structure extending about an entire circumference of the non-pneumatic tire (300), and wherein the first end portions of a plurality of helical springs (315) are directly secured to a first annular structure of the wheel (200) and the second end portions of the plurality of helical springs (315) are directly secured to a second annular structure of the wheel (200), the first end portion of each of the plurality of helical springs (315) being oriented coaxially with the second end portion of each of the plurality of helical springs (315), **characterized in that** the plurality of helical springs (315) are constructed of 304ELC stainless steel, 10 Low-C stainless steel, 2024-T4 aluminum, 6061-T6 aluminum, 2219-T87 aluminum, 5052-H38 aluminum, 5083-H38 aluminum, nickel-based Monel, TD Nickel, nickel-based Hastlelloy B, nickel-based Inconel X, nickel-based Inconel 718, nickel-based Rene 41, 5Al-2.5Sn-Ti ELI titanium, Ti45A [AMS 4902] titanium or multiphase Co-35Ni-20Mo-10Cr alloy MP35N.

## Patentansprüche

1. Baugruppe, welche ein Rad (200) und einen Nicht-Luftreifen (300) umfasst, wobei der Nicht-Luftreifen (300) eine Anzahl von Schraubenfedern (315) umfasst, wobei jede Schraubenfeder (315) einen ersten Endabschnitt, einen zweiten Endabschnitt und einen bogenförmigen Mittelabschnitt umfasst; wobei jede Schraubenfeder (31) mit mindestens einer anderen Schraubenfeder (315) so verflochten ist, das eine geschnürte Toroidstruktur erzielt wird, die sich über den gesamten Umfang des Nicht-Luftreifens (300) erstreckt; und wobei die ersten Endabschnitte einer Anzahl von Schraubenfedern (315) direkt an einer ersten ringförmigen Struktur des Rades (200) befestigt sind und die zweiten Endabschnitte der Anzahl von Schraubenfedern (315) direkt an einer zweiten ringförmigen Struktur des Rades (200) befestigt sind; wobei der erste Endabschnitt jeder der mehreren Schraubenfedern (315) in einer Richtung ausgerichtet ist, die koaxial mit dem zweiten Endabschnitt jeder der mehreren Schraubenfedern (315) ist; **dadurch gekennzeichnet, dass** die mehreren Schraubenfedern (315) aus 304ELC-Edelstahl, aus 310-Edelstahl mit niedrigem Kohlenstoffgehalt, aus Aluminium 2024-T4, aus Aluminium 6061-T6, aus Aluminium 2219-T87, aus Aluminium 5052-H38, aus Aluminium 5083-H38, aus Monel auf Nickelbasis, aus Nickel TD, aus Hastelloy B auf Nickelbasis, aus Inconel X auf Nickelbasis, aus Inconel 718 auf Nickelbasis, aus René 41 auf Nickelbasis, aus 5Al-2,5Sn-Ti ELI-Titan, aus Ti45A-Titan [AMS 4902] oder aus einer mehrphasigen MP35N-Legierung, die aus Co-35Ni-20Mo-10Cr besteht, hergestellt sind.

## Revendications

1. Assemblage qui comprend une roue (200) et un bandage non pneumatique (300), dans lequel le bandage non pneumatique (300) comprend un certain nombre de ressorts hélicoïdaux (315), dans lequel chaque ressort hélicoïdal (315) comprend une première portion terminale, une seconde portion terminale et une portion médiane en forme d'arc ; dans lequel chaque ressort hélicoïdal (31) est entrelacé avec au moins un autre ressort hélicoïdal (315) pour ainsi obtenir une structure toroïdale lacée qui s'étend sur la totalité d'une circonférence du bandage non pneumatique (300) ; et dans lequel les premières portions terminales d'un certain nombre de ressorts hélicoïdaux (315) sont fixées de manière directe à une première structure annulaire de la roue (200) et les secondes portions terminales desdits plusieurs ressorts hélicoïdaux (315) sont fixées de manière directe à une seconde structure annulaire de la roue (200) ; dans lequel la première portion terminale de chacun desdits plusieurs ressorts hélicoïdaux (315) est orientée dans une direction coaxiale avec la seconde portion terminale de chacun desdits plusieurs ressorts hélicoïdaux (315) ; **caractérisé en ce que** lesdits plusieurs ressorts hélicoïdaux (315) sont réalisés à partir d'acier inoxydable 304ELC, d'acier inoxydable 310 à faible teneur en carbone, d'aluminium 2024-T4, d'aluminium 6061-T6, d'aluminium 2219-T87, d'aluminium 5052-H38, d'aluminium 5083-H38, de Monel à base de nickel, de Nickel TD, de Hastelloy B à base de nickel, d'Inconel X à base de nickel, d'Inconel 718 à base de nickel, de René 41 à base de nickel, de titane ELI de 5Al-2,5Sn-Ti, de titane Ti45A [AMS 4902] ou d'un alliage multiphase MP35N de Co-35Ni-20Mo-10Cr.
